# EUROPEAN PATENT SPECIFICATION

(11) **EP 2 202 637 B1**
(45) Date of publication and mention of the grant of the patent: **07.02.2018**
(21) Application number: 09180317.1
(22) Date of filing: 22.12.2009
(51) Int. Cl.: G06F 9/38, G06F 1/32

(54) **REDUCED POWER LOAD/STORE QUEUE SEARCHING MECHANISM**
LADE-/SPEICHERWARTESCHLANGENSUCHMECHANISMUS MIT REDUZIERTEM ENERGIEVERBRAUCH
MÉCANISME DE RECHERCHE DE FILE D'ATTENTE DE STOCKAGE/CHARGEMENT À ALIMENTATION RÉDUITE

(30) Priority: 25.12.2008 CN 200810246370; 04.08.2009 US 535590; 04.08.2009 US 535615
(43) Date of publication of application: 30.06.2010
(73) Proprietor: STMicroelectronics (Beijing) R&D Co. Ltd., Beijing 100080 (CN)
(72) Inventor: Wang, Kai-Feng, Hai Dian District Beijing 100080 (CN); Sun, Hong-Xia, Hai Dian District Beijing 100080 (CN); Wu, Yong-Qiang, Hai Dian Beijing 100080 (CN)
(74) Representative: Style, Kelda Camilla Karen

(56) References cited:
- WO-A1-97/13197
- US-A- 5 752 069
- US-A- 5 812 810
- US-A- 6 021 485
- US-A1- 2008 082 765
- US-B1- 6 449 694

## Description

### BACKGROUND OF THE INVENTION

### 1. Field of the Invention

The techniques described herein relate generally to microprocessors, and some embodiments in particular relate to reducing power consumption in a load queue and/or a store queue.

### 2. Discussion of Related Art

Some superscalar microprocessors are capable of executing instructions out of order to improve performance. However, one concern with executing instructions out of order is that a data hazard can be created when different instructions access the same memory location. For example, if a later instruction is executed out of order prior to an earlier instruction, and both instructions access the same memory location, there is a danger that these instructions may process the wrong data to produce an incorrect result.

To address the potential problems of out of order execution, some superscalar processors implement both a load queue and a store queue. In some implementations, a load queue is a data structure that stores addresses and data for completed load instructions that have retrieved data from memory for use by the microprocessor core. In some implementations, a store queue is another data structure that stores addresses and data for store instructions that transfer data from the microprocessor core to memory. The load queue and store queue may maintain the information about load and store instructions until there is no longer the possibility of a data hazard. The load queue and/or store queue may be implemented in the core of a superscalar microprocessor as dedicated data structures for storing information about load instructions and/or store instructions. In some implementations, the load queue and store queue may each be implemented as a dedicated set of registers.

A load queue and store queue can enable a superscalar processor to perform a variety of techniques for improving performance and avoiding data hazards, including techniques such as store-to-load data forwarding, memory disambiguation, and in-order store retirement. Previously, store-to-load data forwarding and memory disambiguation used fully associative, age-prioritized searches of the store queue or load queue to determine whether these queues had an entry that accessed a particular location in memory.

US 2008/0082765 resolves false dependencies associated with speculatively executing load instructions in a processor core. Physical addresses of a load operation and a store operation are compared in response to a determination that the load operation may be potentially dependent on the store operation.

WO97/13197 describes out-of-order execution control in a processor having multiple execution units. Scheduler logic which tracks the relative age of stores with respect to a particular load (and of loads with respect to a particular store) allows a load-store execution controller to hold younger stores until the completion of older loads.

### SUMMARY OF THE INVENTION

Some embodiments relate to a microprocessor configured to perform out of order execution wherein the microprocessor comprises a load queue comprising multiple entries each corresponding to a load instruction, wherein each entry includes a corresponding load address and age information; a store queue comprising multiple entries each corresponding to a store instruction, wherein each entry includes a corresponding store address and age information; a comparison circuit comprising: a first comparison unit configured to compare a first subset of bits of a load address with a corresponding first subset of bits of a store address to produce a first comparison result indicating whether the first subset of bits of the load address is equal to the first subset of bits of the store address; and an age comparison circuit configured to compare age information corresponding to the load address to age information corresponding to the store address, wherein when age information corresponding to the load address is greater than age information corresponding to the store address, the age comparison circuit produces a disable signal, and when age information corresponding to the load address is less than age information corresponding to the store address, the age comparison circuit produces an enable signal; and a second comparison unit coupled to the first comparison unit for receiving the first comparison result, wherein the second comparison unit is configured to be one of enabled and disabled based on the enable or disable signal produced by the age comparison unit and based on the first comparison result, wherein, when the second comparison unit is enabled, the second comparison unit is configured to compare a second subset of bits of the load address with a corresponding second subset of bits of the store address to produce a second comparison result indicating whether the second subset of bits of the load address is equal to the second subset of bits of the store address; wherein the second comparison result is combined with the first comparison result to produce a final result for searching for mis-speculative load instructions.

The comparison circuit may be configured to search the load queue and/or store queue for any addresses equal to the store address and/or the load address.

The load queue and/or store queue may be at least one memory structure of a microprocessor core dedicated to storing information associated with load operations and/or store operations executed by the microprocessor.

The load queue may store a second load address, and the comparison circuit may further comprise a third comparison unit configured to compare the first subset of bits of the store address with a corresponding first subset of bits of the second load address to produce a third comparison result indicating whether the first subset of bits of the store address is equal to the first subset of bits of the second load address; and a fourth comparison unit coupled to the third comparison unit for receiving the third comparison result, wherein the fourth comparison unit is configured to be enabled and disabled based on the third comparison result, wherein, when the fourth comparison unit is enabled, the fourth comparison unit is configured to compare the second subset of bits of the store address with a corresponding second subset of bits of the second load address.

The second comparison circuit may be configured to produce a second comparison result, and the comparison circuit may further comprise an AND gate configured to receive the first comparison result and the second comparison result and produce an output signal indicating whether the store address is equal to the load address.

The first subset of bits of the store address may comprise a plurality of least significant bits of the store address and/or the first subset of bits of the load address may comprise a plurality of least significant bits of the load address.

The load address may be a physical memory address accessed by the microprocessor in response to an associated load instruction having a corresponding entry in the load queue and/or the store address may be a physical memory address accessed by the microprocessor in response to an associated store instruction having a corresponding entry in the store queue.

The first comparison unit may be a first comparator configured to perform a bit-wise comparison of the first subset of bits of the store address and the first subset of bits of the load address; and the second comparison unit may be a second comparator configured to perform a bit-wise comparison of the second subset of bits of the store address and the second subsets of bits of the load address.

The load queue and/or store queue may comprise a plurality of entries having a plurality of addresses, wherein each of the plurality of addresses is compared with the store address and/or the load address.

The first subset of bits of the store address may comprise no more than ¼ of a total number of bits in the store address and/or the first subset of bits of the load address may comprise no more than ¼ of a total number of bits in the load address.

The second subset of bits of the store address may include at least one bit of the store address that is not included in the first subset of bits of the store address and/or the second subset of bits of the load address may include at least one bit of the load address that is not included in the first subset of bits of the load address.

The second subset of bits of the store address may not have any bits in common with the first subset of bits of the store address and/or the second subset of bits of the load address may not have any bits in common with the first subset of bits of the load address.

Some embodiments relate to a method wherein a load queue comprises multiple entries each corresponding to a load instruction comprising multiple entries, wherein each entry includes a corresponding load address and age information, and wherein a store queue comprises multiple entries each corresponding to a store instruction, wherein each entry includes a corresponding store address and age information; the method comprising: comparing a first subset of bits of a load address with a corresponding first subset of bits of a store address to produce a first comparison result indicating whether the first subset of bits of the load address is equal to the first subset of bits of the store address; and comparing the age information corresponding to the load address to age information corresponding to the store address, wherein a disable signal is produced when age information corresponding to the load address is greater than age information corresponding to the store address and wherein an enable signal is produced when age information corresponding to the load address is less than age information corresponding to the store address; and when the first subset of bits of the load address is equal to the first subset of bits of the store address, and depending on the enable or disable signal, comparing a second subset of bits of the load address with a corresponding second subset of bits of the store address to produce a second comparison result indicating whether the second subset of bits of the load address is equal to the second subset of bits of the store address; wherein the second comparison result is combined with the first comparison result to produce a final result for searching for mis-speculative load instructions.

In a preferred embodiment, when the first subset of bits of the store address is not equal to the first subset of bits of the load address, no other bits of the store address and the load address are compared.

The load queue may store a second load address, and the method may further comprise comparing the first subset of bits of the store address with a corresponding first subset of bits of the second load address; and when the first subset of bits of the second load address is equal to the first subset of bits of the store address, comparing the second subset of bits in the store address with a corresponding second subset of bits of the second load address.

### BRIEF DESCRIPTION OF THE DRAWINGS

In the drawings, each identical or nearly identical component that is illustrated in various figures is represented by a like numeral. For purposes of clarity, not every component may be labeled in every drawing. In the drawings:
FIG. 1 shows a load queue and a comparison circuit that can search the load queue based on a memory address, according to some embodiments.
FIG. 2 shows an embodiment of a comparison circuit for a load queue.
FIG. 3 shows the comparison circuit of FIG. 2 in greater detail,
FIG. 4 shows a store queue and a comparison circuit that can search the store queue based on a memory address, according to some embodiments.

### DETAILED DESCRIPTION

As discussed above, prior techniques for searching a microprocessor load queue or store queue used fully associative searches to determine whether a queue had an entry that accessed a particular physical address in memory. In these prior search techniques, an entire memory address was compared with all of the addresses in the load queue or store queue to determine whether there was a matching entry. Each bit of the searched memory address was compared with each bit of the addresses in the queue. However, upon simulation and study of load queue and store queue searches, it has been appreciated that most searches of load queues and store queues do not result in finding an address that matches the searched address. Also, comparing the entire searched address with all of the addresses in the queue can consume a significant amount of power.

In some embodiments, a search of a load queue and/or store queue includes an initial partial comparison of the searched address with the addresses in the queue. This partial comparison can enable early identification of addresses that do not match so that full comparisons of non matching addresses are reduced, which can reduce power consumption in the load queue and/or store queue.

For example, in a first comparison stage, a subset of the bits of the searched address can be compared with the corresponding bits of each address in the queue to determine if any potentially matching addresses are stored in the queue. If the subset of bits matches the corresponding bits of an address in the queue, then the address in the queue is a potential match to the searched address, and the remaining bits of the potentially matching address can be checked in another stage to determine whether the address in the queue fully matches the searched address. Some or all of the addresses in the queue may be eliminated from consideration as potential matches when one or more of the address bits are determined not to match in the first comparison stage. When an addresses in the queue is determined to be unequal to the searched address in the initial comparison stage, it is not necessary to compare further bits of this address with the searched address. The number of bit-wise comparisons performed during the search can be decreased by using an initial comparison stage to filter the queue addresses for potential matches and eliminate non-matching addresses from consideration. Reducing the number of bit-wise comparisons performed during the search can advantageously enable reducing power consumption when searching a load queue and/or a store queue.

As discussed above, a superscalar processor can search for entries in the load queue and/or store queue when performing various operations such as memory disambiguation and load-to-store data forwarding. For example, the load queue can be searched to determine whether there are any pending load instructions corresponding to a particular memory address. When a store instruction is ready to be executed, its address may be used to search the load queue to determine whether there are any mis-speculative load instructions. This search may be performed in an address calculation stage, write-back stage, commit stage and/or any other suitable processing stage. If any mis-speculative load instructions are found, then those load instructions may be reexecuted to load the more recent data. However, it has been appreciated that prior techniques for searching load queues and store queues consumed a significant amount of power.

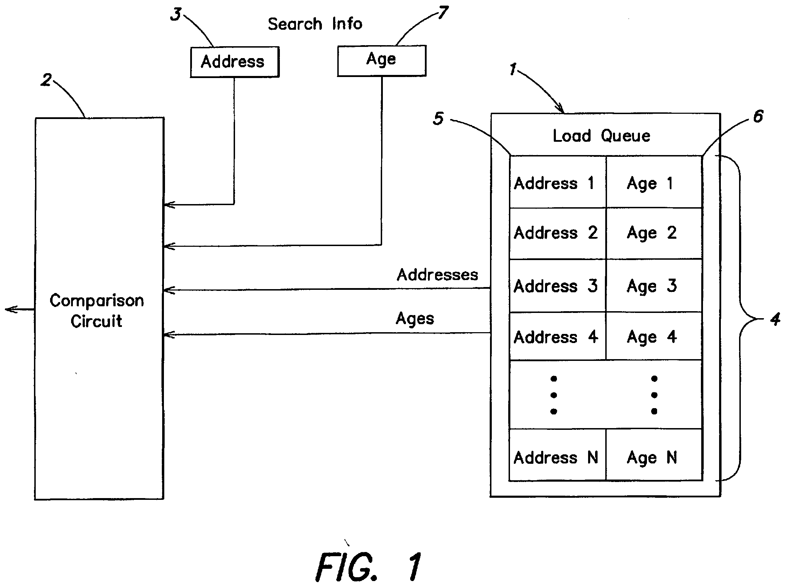

FIG. 1 shows an example of a load queue 1 and a comparison circuit 2 that can determine whether load queue 1 includes a searched address 3, according to some embodiments. Load queue 1 stores multiple entries 4 corresponding to load instructions, and each entry 4 may include a corresponding address 5 and age information 6. Address 5 may represent the physical memory address of a location in memory accessed by the corresponding load instruction. Address 5 can be a binary number having any suitable number of bits, such as thirty-two bits, for example, and searched address 3 may have the same number of bits. Age information 6 may represent the age of the corresponding load instruction.

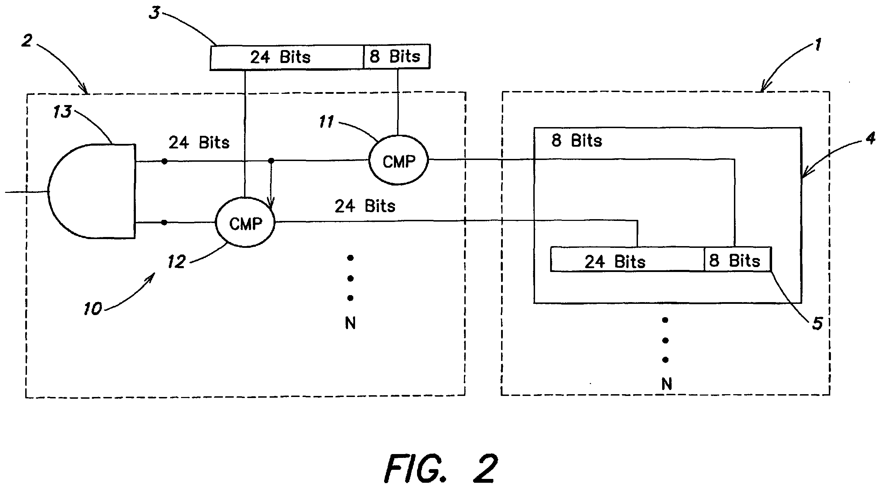

As discussed above, the load queue 1 may be searched to determine whether there are any entries 4 having an address 5 that matches the searched address 3. In some embodiments, comparison circuit 2 receives the searched address 3 and the addresses 5 of the entries 4 in the load queue. Comparison circuit 2 can compare the searched address 3 with all of the addresses 5 in the load queue to determine whether there are one or more matching addresses. In some embodiments, comparison circuit 2 compares the searched address 3 with an address 5 of the load queue using two or more comparison stages, as discussed in further detail below with respect to FIG. 2. For example, a subset of the bits of the searched address 3 may be compared with the corresponding bits of address 5 in a first comparison stage to determine whether address 5 potentially matches searched address 3. For any addresses 5 that are determined to potentially match the searched address 3, these potentially matching addresses may be further compared with the searched address 3 in one or more additional comparison stages.

In some circumstances, searches may be filtered based on the age of an instruction. For example, if there is a store instruction that accesses an particular address, the load queue may be searched to determine whether there are any load instructions accessing this address that are younger than the store instruction, to determine whether there are any mis-speculative load instructions. Comparison circuit 2 may receive age information 7 corresponding to the searched address 3, and age information 6 corresponding to each load instruction of the load queue 1. When searching for mis-speculative instructions, circuit 2 may use the age information 6, 7 to filter the results of the address comparison to only addresses that are younger than the age represented by age information 7. However, it should be appreciated that any suitable age-related filtering may be performed, if desired, as the techniques described herein are not limited to performing age-related filtering.

FIG. 2 shows a circuit portion 10 of comparison circuit 2, according to some embodiments, for comparing an address 5 of the load queue 1 with a searched address 3. For clarity, only a portion of comparison circuit 2 is shown in FIG. 2. FIG. 2 shows circuit portion 10 of comparison circuit 2 that can compare the searched address 3 with a single address 5 in the load queue 1. However, comparison circuit 2 may include additional circuitry, in some embodiments. For example, if there are N entries 4 in the load queue, then comparison circuit 2 may include N versions of circuit portion 10 for comparing the respective addresses 5 of these entries with the searched address 3.

In the example shown in FIG. 2, the searched address 3 has thirty-two bits, although it should be appreciated that addresses of any suitable number of bits may be used. As illustrated in FIG. 2, searched address 3 has twenty-four most significant bits and eight least significant bits. In the first comparison stage, bit-wise comparison unit 11 compares the eight least significant bits of the searched address 3 with the eight least significant bits of address 5 to determine whether address 5 potentially matches the searched address 3. Bit-wise comparison unit 11 may be a comparator that performs a bit-wise comparison of the bits of the addresses based on their respective positions in addresses 3 and 5. For example, the least significant bit of searched address 3 may be compared with the least significant bit of address 5, the second least significant bit of searched address 3 may be compared with the second least significant bit of address 5, etc. Bit-wise comparison unit 11 can generate an output with a logic signal indicating whether the eight least significant bits of the searched address 3 are all equal to the eight least significant bits of address 5 of the load queue. As shown in FIG. 2, the output signal of bit-wise comparison unit 11 may be sent to an enabling input of bit-wise comparison unit 12. If bit-wise comparison unit 11 determines that the least significant bits of addresses 3 and 5 are all equal, then the output of bit-wise comparison unit 11 may have a high logic level that enables bit-wise comparison unit 12 to perform a second stage of comparison. Bit-wise comparison unit 12 may be a comparator that compares the addresses 3 and 5 in a second stage of comparison by performing a bit-wise comparison of the remaining twenty-four most significant bits of searched address 3 with the twenty-four most significant bits of address 5. If the twenty-four most significant bits match, bit-wise comparison unit 12 may output a signal with a high logic level, In this example, the outputs of bit-wise comparison units 11 and 12 are sent to first and second inputs of AND gate 13 which determines whether all of the bits of searched address 3 match all of the bits of address 5. If all of the bits match, AND gate 13 receives two logic high signals from bit-wise comparison units 11 and 12, and AND gate 13 may produce an output signal with a high logic level to indicate that addresses 3 and 5 match entirely. If bit-wise comparison unit 11 determines that the least significant bits do not match, then bit-wise comparison unit 11 outputs a signal with a low logic level to disable bit-wise comparison unit 5, which can advantageously reduce power consumption for the load queue search. When the subset of bits does not match in the first stage, the low logic level from bit-wise comparison unit 11 is received by the AND gate 13 which produces an output signal with a low logic level to indicate that the addresses do not match.

Comparison circuit 2 may include N versions of circuit 10 that each compare a respective address 5 of the load queue with the searched address 3, Advantageously, some of the addresses 5 in the load queue may be eliminated from the search by bit-wise comparison unit 11 during the first stage of comparison. In this example, for the addresses 5 that are eliminated from the search in the first stage, only eight bits of the address are compared rather than the full thirty-two bits. In some circumstances, a significant number of addresses in the load queue can be eliminated from consideration in the first stage of comparison, such as 95% of the addresses, for example. As a result, the amount of power needed to perform load queue searches can be reduced. In some circumstances, the dynamic power consumption of the load queue can be reduced by about 50%, however, the amount of power saved can be higher or lower depending on the particular circumstances.

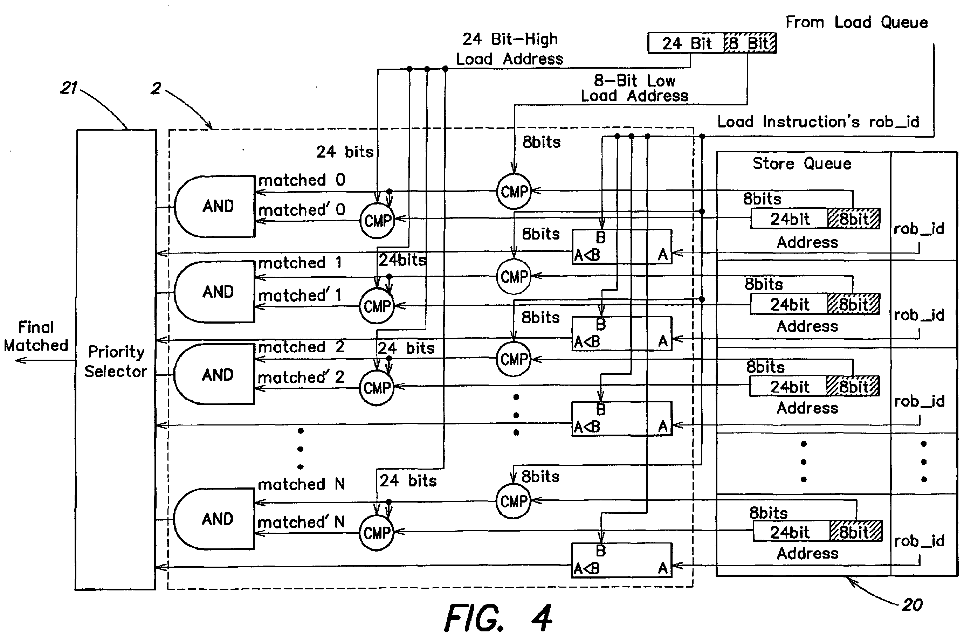

A variety other implementations of comparison circuit 2 are possible. For example, although FIG. 2 is discussed in the context of a load queue, comparison circuit 2 may be used to compare addresses for a store queue, as discussed further below with respect to FIG. 4. Other variations are also possible. In the example of FIG. 2, circuit 10 performs two comparison stages, however, more than two comparison stages can be performed in some embodiments, such as three stages or more. Different numbers of bits may be compared, as the techniques described herein are not limited to comparing a particular number of bits in a stage. Furthermore, these techniques are not limited to comparing the least significant bits first, as any suitable bits may be compared first, and any suitable grouping of bits may be used.

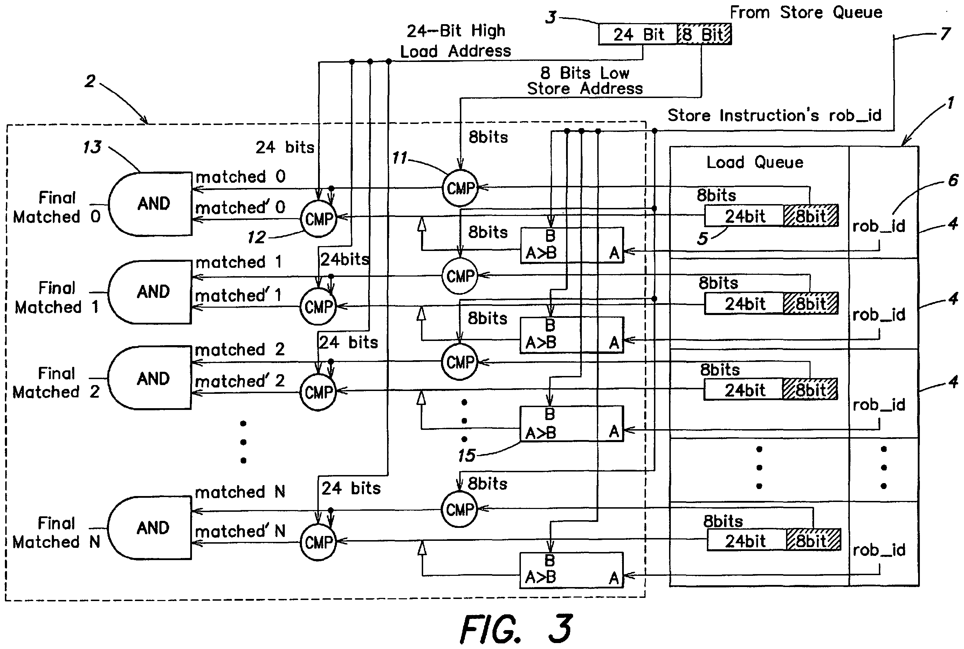

FIG. 3 shows comparison circuit 2 in further detail, including a plurality of circuits 10 for comparing different addresses 5 in the load queue 1 with searched address 3. In some embodiments, each entry 4 in the load queue may have a corresponding circuit portion 10 for comparing the corresponding address 5 with the searched address 3. Each of these circuit portions 10 may be the same or they may be different, as the techniques described herein are not limited to using the same circuit portion 10 for each entry 4 in the load queue, In some embodiments, all of the addresses in the load queue may be compared with the searched address 3 in parallel, as shown in FIG. 3.

As shown in the example of FIG. 3, in some embodiments the searched address 3 may be received from the store queue of the microprocessor to check whether there are any load instructions that use the same memory address as a store instruction. The load queue 1 may be searched for any entries 4 having an address 5 that is the same as the searched address 3 of a store instruction in the store queue, using the techniques described herein to compare address 5 in the queue with searched address 3. As discussed above, load queue may searched in connection with performing any of a variety of techniques such as memory disambiguation and store-to-load data forwarding, for example.

FIG. 3 also shows that age information 6 (rob_id) can be used to filter the result of the address comparison, as discussed above with respect to FIG. 1. Comparison circuit 2 may receive the age information 7 for a store instruction having a corresponding entry in the store queue. An age comparison circuit 15 may check whether an entry in the load queue 1 is younger than the store instruction based on the age information 6 and 7. For example, when searching for mis-speculative load instructions, age comparison circuit 15 may filter out addresses that do not correspond to a load instruction that is younger than the store instruction. If the age (rob_id A) of the load queue entry is greater than the age of the store instruction (rob_id B), the age comparison circuit 15 may produce a logic signal that disables the output of first comparison unit 11. As a result, the output of the first comparison unit may be a low logic level that disables the second comparison unit 12. Thus, in this example, even if all of the subset of bits match, this entry may be filtered out of the search by the age comparison circuit 15. For entries that are not filtered out of the search, if the age of the load queue entry is less than the age of the store instruction then the comparison circuit 15 may produce a logic signal that enables the output of the first comparison unit 11.

FIG. 4 shows an example of a store queue 20 that can be searched for an address using comparison circuit 2, according to some embodiments. Comparison circuit 2 may compare the addresses of store queue 20 with searched address 3 using similar techniques to those discussed above with respect to load queue 1 and comparison circuit 2. Store queue 20 may be searched in any of a variety of circumstances. For example, a search of store queue 20 may be performed when a target address for a load instruction is calculated. If a matching entry is found in store queue 20 for a later load instruction, the data from the store instruction can be forwarded to the load instruction to that the data is available more quickly. Because there may be more than one store instruction that accesses the same address, a priority selector 21 may be used to select the most recent store instruction older than the load instruction, based on age information,

As discussed above with respect to load queue 1, the use of comparison circuit 2 can save a significant amount of power in the store queue 20. In some circumstances, the dynamic power consumption of the store queue 20 can be reduced by about 24%. However the amount of power saved can be higher or lower depending on the particular circumstances.

This invention is not limited in its application to the details of construction and the arrangement of components set forth in the foregoing description or illustrated in the drawings. The invention is capable of other embodiments and of being practiced or of being carried out in various ways. Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the scope of the invention. Accordingly, the foregoing description and drawings are by way of example only.

## Claims

1. A microprocessor configured to perform out of order execution wherein the microprocessor comprises a load queue (1) comprising multiple entries (4) each corresponding to a load instruction, wherein each entry includes a corresponding load address (5) and age information (6);
a store queue comprising multiple entries each corresponding to a store instruction, wherein each entry includes a corresponding store address (3) and age information (7); a comparison circuit (2) comprising:
a first comparison unit (11) configured to compare a first subset of bits of a load address (5) with a corresponding first subset of bits of a store address (3) to produce a first comparison result indicating whether the first subset of bits of the load address (5) is equal to the first subset of bits of the store address (3); and;
an age comparison circuit (15), wherein the microprocessor is **characterized in that** the age comparison circuit (15) is configured to compare age information (6) corresponding to the load address (5) to age information (7) corresponding to the store address (3), wherein when age information (6) corresponding to the load address (5) is greater than age information (7) corresponding to the store address (3), the age comparison circuit (15) produces a disable signal, and when age information (6) corresponding to the load address (5) is less than age information (7) corresponding to the store address (3), the age comparison circuit (15) produces an enable signal;
and **in that** a second comparison unit (12) is coupled to the first comparison unit (11) for receiving the first comparison result, wherein the second comparison unit (12) is configured to be one of enabled and disabled based on the enable or disable signal produced by the age comparison unit and based on the first comparison result, wherein, when the second comparison unit (12) is enabled, the second comparison unit (12) is configured to compare a second subset of bits of the load address (5) with a corresponding second subset of bits of the store address (3) to produce a second comparison result indicating whether the second subset of bits of the load address (5) is equal to the second subset of bits of the store address (3);
wherein the second comparison result is combined with the first comparison result to produce a final result for searching the load queue for mis-speculative load instructions.

2. The microprocessor of claim 1, wherein the comparison circuit (2) is configured to search the load queue (1) and/or store queue for any addresses equal to the store address (3) and/or the load address (5).

3. The microprocessor of claim 1 or 2, wherein the load queue and/or store queue is at least one memory structure of a microprocessor core dedicated to storing information associated with load operations and/or store operations executed by the microprocessor.

4. The microprocessor of any preceding claim, wherein the load queue stores a second load address, and the comparison circuit (2) further comprises:
a third comparison unit configured to compare the first subset of bits of the store address (3) with a corresponding first subset of bits of the second load address to produce a third comparison result indicating whether the first subset of bits of the store address (3) is equal to the first subset of bits of the second load address; and
a fourth comparison unit coupled to the third comparison unit for receiving the third comparison result, wherein the fourth comparison unit is configured to be enabled and disabled based on the third comparison result, wherein, when the fourth comparison unit is enabled, the fourth comparison unit is configured to compare the second subset of bits of the store address (3) with a corresponding second subset of bits of the second load address.

5. The microprocessor of any preceding claim, wherein the second comparison unit (12) is configured to produce a second comparison result, and wherein the comparison circuit (2) further comprises:
an AND gate (13) configured to receive the first comparison result and the second comparison result and produce an output signal indicating whether the store address (3) is equal to the load address (5).

6. The microprocessor of any preceding claim, wherein the first subset of bits of the store address (3) comprises a plurality of least significant bits of the store address(3) and/or the first subset of bits of the load address (5) comprises a plurality of least significant bits of the load address (5).

7. The microprocessor of any preceding claim, wherein the load address (5) is a physical memory address accessed by the microprocessor in response to an associated load instruction having a corresponding entry in the load queue (1) and/or the store address (3) is a physical memory address accessed by the microprocessor in response to an associated store instruction having a corresponding entry in the store queue.

8. The microprocessor of any preceding claim, wherein the first comparison unit (11) is a first comparator configured to perform a bit-wise comparison of the first subset of bits of the store address (3) and the first subset of bits of the load address (5); and
the second comparison unit (12) is a second comparator configured to perform a bit-wise comparison of the second subset of bits of the store address (3) and the second subset of bits of the load address (5).

9. The microprocessor of any preceding claim, wherein the load queue (1) and/or store queue comprises a plurality of entries having a plurality of addresses, wherein each of the plurality of addresses is compared with the store address (3) and/or the load address (5).

10. The microprocessor of any preceding claim, wherein the first subset of bits of the store address (3) comprises no more than ¼ of a total number of bits in the store address (3) and/or the first subset of bits of the load address (5) comprises no more than ¼ of a total number of bits in the load address (5).

11. The microprocessor of any preceding claim, wherein the second subset of bits of the store address (3) includes at least one bit of the store address (3) that is not included in the first subset of bits of the store address (3) and/or the second subset of bits of the load address (5) includes at least one bit of the load address (5) that is not included in the first subset of bits of the load address (5).

12. The microprocessor of claim 11, wherein,
the second subset of bits of the store address (3) does not have any bits in common with the first subset of bits of the store address (3) and/or the second subset of bits of the load address (5) does not have any bits in common with the first subset of bits of the load address (5).

13. A method in a microprocessor, wherein a load queue (1) comprises multiple entries (4) each corresponding to a load instruction comprising multiple entries (4), wherein each entry (4) includes a corresponding load address (5) and age information (6), and wherein a store queue comprises multiple entries each corresponding to a store instruction, wherein each entry includes a corresponding store address (3) and age information (7); the method comprising:
comparing a first subset of bits of a load address (5) with a corresponding first subset of bits of a store address (3) to produce a first comparison result indicating whether the first subset of bits of the load address (5) is equal to the first subset of bits of the store address (3);wherein the method is **characterized by**
comparing the age information (6) corresponding to the load address (5) to age information (7) corresponding to the store address (3), wherein a disable signal is produced when age information (6) corresponding to the load address (5) is greater than age information (7) corresponding to the store address (3) and wherein an enable signal is produced when age information (6) corresponding to the load address (5) is less than age information (7) corresponding to the store address (3); and
when the first subset of bits of the load address (5) is equal to the first subset of bits of the store address (3), and depending on the enable signal or disable signal, comparing a second subset of bits of the load address (5) with a corresponding second subset of bits of the store address (3) to produce a second comparison result indicating whether the second subset of bits of the load address (5) is equal to the second subset of bits of the store address (3);
wherein the second comparison result is combined with the first comparison result to produce a final result for searching the load queue for mis-speculative load instructions.

14. The method of claim 13, wherein, when the first subset of bits of the store address (3) is not equal to the first subset of bits of the load address (5), no other bits of the store address(3) and the load address (5) are compared.

15. The method of claim 13 or 14, wherein the load queue stores a second load address, and the method further comprises:
comparing the first subset of bits of the store address (3) with a corresponding first subset of bits of the second load address; and
when the first subset of bits of the second load address is equal to the first subset of bits of the store address (3), comparing the second subset of bits in the store address (3) with a corresponding second subset of bits of the second load address.

## Patentansprüche

1. Mikroprozessor, der zur ungeordneten Durchführung von Vorgängen ausgebildet ist, wobei der Mikroprozessor aufweist:
eine Ladewarteschlange (1), die mehrere Einträge (4) aufweist, die jeweils einem Ladebefehl entsprechen, wobei jeder Eintrag eine entsprechende Ladeadresse (5) und Altersinformation (6) beinhaltet;
eine Speicherwarteschlange, die mehrere Einträge aufweist, die jeweils einem Speicherbefehl entsprechen, wobei jeder Eintrag eine entsprechende Speicheradresse (3) und Altersinformation (7) beinhaltet;
eine Vergleichsschaltung (2), die Folgendes aufweist:
eine erste Vergleichseinheit (11), die zum Vergleichen einer ersten Teilmenge von Bits einer Ladeadresse (5) mit einer entsprechenden ersten Teilmenge von Bits einer Speicheradresse (3) ausgebildet ist, um ein erstes Vergleichsergebnis zu erzeugen, das anzeigt, ob die erste Teilmenge von Bits der Ladeadresse (5) gleich der ersten Teilmenge von Bits der Speicheradresse (3) ist; und
eine Altersvergleichsschaltung (15),
wobei der Mikroprozessor **dadurch gekennzeichnet ist,**
**dass** die Altersvergleichsschaltung (15) dazu ausgebildet ist, der Ladeadresse (5) entsprechende Altersinformation (6) mit der Speicheradresse (3) entsprechender Altersinformation (7) zu vergleichen, wobei dann, wenn der Ladeadresse (5) entsprechende Altersinformation (6) größer ist als der Speicheradresse (3) entsprechende Altersinformation (7), die Altersvergleichsschaltung (15) ein Deaktivierungssignal erzeugt, und dann, wenn der Ladeadresse (5) entsprechende Altersinformation (6) geringer ist als der Speicheradresse (3) entsprechende Altersinformation (7), die Altersvergleichsschaltung (15) ein Aktivierungssignal erzeugt;
und **dass** eine zweite Vergleichseinheit (12) mit der ersten Vergleichseinheit (11) zum Empfangen des ersten Vergleichsergebnisses gekoppelt ist, wobei die zweite Vergleichseinheit (12) dazu ausgebildet ist, auf der Basis des von der Altersvergleichseinheit erzeugten Aktivierungs- oder Deaktivierungssignals und auf der Basis des ersten Vergleichsergebnisses aktiviert oder deaktiviert zu werden, wobei, wenn die zweite Vergleichseinheit (12) aktiviert ist, die zweite Vergleichsschaltung (12) dazu ausgebildet ist, eine zweite Teilmenge von Bits der Ladeadresse (5) mit einer entsprechenden zweiten Teilmenge von Bits der Speicheradresse (3) zu vergleichen, um ein zweites Vergleichsergebnis zu erzeugen, das anzeigt, ob die zweite Teilmenge von Bits der Ladeadresse (5) gleich der zweiten Teilmenge von Bits der Speicheradresse (3) ist;
wobei das zweite Vergleichsergebnis mit dem ersten Vergleichsergebnis kombiniert wird, um ein abschließendes Ergebnis zum Durchsuchen der Ladewarteschlange nach fehlspekulativen Ladeanweisungen zu erzeugen.

2. Mikroprozessor nach Anspruch 1,
wobei die Vergleichsschaltung (2) dazu ausgebildet ist, die Ladewarteschlange (1) und/oder die Speicherwarteschlange nach jeglichen Adressen zu durchsuchen, die gleich der Speicheradresse (3) und/oder der Ladeadresse (5) sind.

3. Mikroprozessor nach Anspruch 1 oder 2,
wobei die Ladewarteschlange und/oder die Speicherwarteschlange mindestens eine Speicherstruktur eines Mikroprozessorkerns ist, der speziell zum Speichern von Information vorgesehen ist, die von dem Mikroprozessor ausgeführten Ladeoperationen und/oder Speicheroperationen zugeordnet sind.

4. Mikroprozessor nach einem der vorhergehenden Ansprüche,
wobei die Ladewarteschlange eine zweite Ladeadresse speichert und die Vergleichsschaltung (12) ferner aufweist:
eine dritte Vergleichseinheit, die zum Vergleichen der ersten Teilmenge von Bits der Speicheradresse (3) mit einer entsprechenden ersten Teilmenge von Bits der zweiten Ladeadresse ausgebildet ist, um ein drittes Vergleichsergebnis zu erzeugen, das anzeigt, ob die erste Teilmenge von Bits der Speicheradresse (3) gleich der ersten Teilmenge von Bits der zweiten Ladeadresse ist; und
eine vierte Vergleichseinheit, die mit der dritten Vergleichseinheit zum Empfangen des dritten Vergleichsergebnisses gekoppelt ist, wobei die vierte Vergleichseinheit dazu ausgebildet ist, auf der Basis des dritten Vergleichsergebnisses aktiviert und deaktiviert zu werden, wobei bei Aktivierung der vierten Vergleichseinheit die vierte Vergleichseinheit dazu ausgebildet ist, die zweite Teilmenge von Bits der Speicheradresse (3) mit einer entsprechenden zweiten Teilmenge von Bits der zweiten Ladeadresse zu vergleichen.

5. Mikroprozessor nach einem der vorhergehenden Ansprüche,
wobei die zweite Vergleichseinheit (12) zum Erzeugen eines zweiten Vergleichsergebnisses ausgebildet ist, und wobei die Vergleichsschaltung (2) ferner aufweist:
ein UND-Gatter (13), das zum Empfangen des ersten Vergleichsergebnisses und des zweiten Vergleichsergebnisses und zum Erzeugen eines Ausgangssignals ausgebildet ist, das anzeigt, ob die Speicheradresse (3) gleich der Ladeadresse (5) ist.

6. Mikroprozessor nach einem der vorhergehenden Ansprüche,
wobei die erste Teilmenge von Bits der Speicheradresse (3) eine Mehrzahl von niedrigstwertigen Bits der Speicheradresse (3) aufweist und/oder die erste Teilmenge von Bits der Ladeadresse (5) eine Mehrzahl von niedrigstwertigen Bits der Ladeadresse (5) aufweist.

7. Mikroprozessor nach einem der vorhergehenden Ansprüche,
wobei die Ladeadresse (5) eine physikalische Speicheradresse ist, auf die der Mikroprozessor als Reaktion auf einen zugehörigen Ladebefehl mit einem entsprechenden Eintrag in der Ladewarteschlange (1) zugreift und/oder wobei die Speicheradresse (3) eine physikalische Speicheradresse ist, auf die der Mikroprozessor als Reaktion auf einen zugehörigen Speicherbefehl mit einem entsprechenden Eintrag in der Speicherwarteschlange zugreift.

8. Mikroprozessor nach einem der vorhergehenden Ansprüche,
wobei die erste Vergleichseinheit (11) ein erster Komparator ist, der dazu ausgebildet ist, einen bitweisen Vergleich der ersten Teilmenge von Bits der Speicheradresse (3) und der ersten Teilmenge von Bits der Ladeadresse (5) auszuführen; und
wobei die zweite Vergleichseinheit (12) ein zweiter Komparator ist, der dazu ausgebildet ist, einen bitweisen Vergleich der zweiten Teilmenge von Bits der Speicheradresse (3) und der zweiten Teilmenge von Bits der Ladeadresse (5) auszuführen.

9. Mikroprozessor nach einem der vorhergehenden Ansprüche,
wobei die Ladewarteschlange (1) und/oder die Speicherwarteschlange eine Mehrzahl von Einträgen mit einer Mehrzahl von Adressen aufweist, wobei jede der mehreren Adressen mit der Speicheradresse (3) und/oder der Ladeadresse (5) verglichen wird.

10. Mikroprozessor nach einem der vorhergehenden Ansprüche,
wobei die erste Teilmenge von Bits der Speicheradresse (3) nicht mehr als ein Viertel einer Gesamtanzahl von Bits in der Speicheradresse (3) aufweist und/oder die erste Teilmenge von Bits der Ladeadresse (5) nicht mehr als ein Viertel einer Gesamtanzahl von Bits in der Ladeadresse (5) aufweist.

11. Mikroprozessor nach einem der vorhergehenden Ansprüche,
wobei die zweite Teilmenge von Bits der Speicheradresse (3) mindestens ein Bit der Speicheradresse (3) beinhaltet, das nicht in der ersten Teilmenge von Bits der Speicheradresse (3) enthalten ist, und/oder wobei die zweite Teilmenge von Bits der Ladeadresse (5) mindestens ein Bit der Ladeadresse (5) beinhaltet, das nicht in der ersten Teilmenge von Bits der Ladeadresse (5) enthalten ist.

12. Mikroprozessor nach Anspruch 11,
wobei die zweite Teilmenge von Bits der Speicheradresse (3) keinerlei Bits mit der ersten Teilmenge von Bits der Speicheradresse (3) gemeinsam hat, und/oder wobei die zweite Teilmenge von Bits der Ladeadresse (5) keinerlei Bits mit der ersten Teilmenge von Bits der Ladeadresse (5) gemeinsam hat.

13. Verfahren in einem Mikroprozessor,
bei dem eine Ladewarteschlange (1) mehrere Einträge (4) aufweist, die jeweils einem Ladebefehl mit mehreren Einträgen (4) entsprechen, wobei jeder Eintrag (4) eine entsprechende Ladeadresse (5) und Altersinformation (6) aufweist, und wobei eine Speicherwarteschlange mehrere Einträge aufweist, die jeweils einem Speicherbefehl entsprechen, wobei jeder Eintrag eine entsprechende Speicheradresse (3) und Altersinformation (7) aufweist;
wobei das Verfahren aufweist:
Vergleichen einer ersten Teilmenge von Bits einer Ladeadresse (5) mit einer entsprechenden ersten Teilmenge von Bits einer Speicheradresse (3), um ein erstes Vergleichsergebnis zu erzeugen, das anzeigt, ob die erste Teilmenge von Bits der Ladeadresse (5) gleich der ersten Teilmenge von Bits der Speicheradresse (3) ist;
wobei das Verfahren durch folgende Schritte gekennzeichnet ist:
Vergleichen der der Ladeadresse (5) entsprechenden Altersinformation (6) mit der Speicheradresse (3) entsprechender Altersinformation (7), wobei ein Deaktivierungssignal erzeugt wird, wenn der Ladeadresse (5) entsprechende Altersinformation (6) größer ist als der Speicheradresse (3) entsprechende Altersinformation (7), und wobei ein Aktivierungssignal erzeugt wird, wenn der Ladeadresse (5) entsprechende Altersinformation (6) geringer ist als der Speicheradresse (3) entsprechende Altersinformation (7); und
wenn die erste Teilmenge von Bits der Ladeadresse (5) gleich der ersten Teilmenge von Bits der Speicheradresse (3) ist sowie in Abhängigkeit von dem Aktivierungssignal oder Deaktivierungssignal, Vergleichen einer zweiten Teilmenge von Bits der Ladeadresse (5) mit einer entsprechenden zweiten Teilmenge von Bits der Speicheradresse (3), um ein zweites Vergleichsergebnis zu erzeugen, das anzeigt, ob die zweite Teilmenge von Bits der Ladeadresse (5) gleich der zweiten Teilmenge von Bits der Speicheradresse (3) ist;
wobei das zweite Vergleichsergebnis mit dem ersten Vergleichsergebnis kombiniert wird, um ein abschließendes Ergebnis zum Durchsuchen der Ladewarteschlange nach fehlspekulativen Ladeanweisungen zu erzeugen.

14. Verfahren nach Anspruch 13,
wobei dann, wenn die erste Teilmenge von Bits der Speicheradresse (3) nicht gleich der ersten Teilmenge von Bits der Ladeadresse (5) ist, keine weiteren Bits der Speicheradresse (3) und der Ladeadresse (5) verglichen werden.

15. Verfahren nach Anspruch 13 oder 14,
wobei die Ladewarteschlange eine zweite Ladeadresse speichert und das Verfahren ferner aufweist:
Vergleichen der ersten Teilmenge von Bits der Speicheradresse (3) mit einer entsprechenden ersten Teilmenge von Bits der zweiten Ladeadresse; und w
enn die erste Teilmenge von Bits der zweiten Ladeadresse gleich der ersten Teilmenge von Bits der Speicheradresse (3) ist, Vergleichen der zweiten Teilmenge von Bits in der Speicheradresse (3) mit einer entsprechenden zweiten Teilmenge von Bits der zweiten Ladeadresse.

## Revendications

1. Microprocesseur configuré pour effectuer une exécution dans le désordre, dans lequel le microprocesseur comprend une file d'attente de chargement (1) comportant
des entrées multiples (4), correspondant chacune à une instruction de chargement, dans lequel chaque entrée inclut une adresse de chargement correspondante (5) et une information sur l'âge (6) ;
une file d'attente de stockage comprenant des entrées multiples correspondant chacune à une instruction de stockage, dans lequel chaque entrée inclut une adresse de stockage correspondante (3) et une information sur l'âge (7) ; un circuit comparateur (2) comprenant :
une première unité de comparaison (11), configurée pour comparer un premier sous-ensemble de bits d'une adresse de chargement (5) à un premier sous-ensemble de bits d'une adresse de stockage (3) pour produire un résultat de la première comparaison indiquant si le premier sous-ensemble de bits de l'adresse de chargement (5) équivaut ou non au premier sous-ensemble de bits de l'adresse de stockage (3) ; et
un circuit comparateur d'âge (15), dans lequel le microprocesseur
est **caractérisé en ce que** le circuit comparateur d'âge (15) est configuré pour comparer une information sur l'âge (6), correspondant à l'adresse de chargement (5), à l'information sur l'âge (7) correspondant à l'adresse de stockage (3), dans lequel, lorsque l'information sur l'âge (6) correspondant à l'adresse de chargement (5) est supérieure à l'information sur l'âge (7) correspondant à l'adresse de stockage (3), le circuit comparateur d'âge (15) émet un signal d'invalidation, et, quand l'information sur l'âge (6) correspondant à l'adresse de chargement (5) est inférieure à l'information sur l'âge (7) correspondant à l'adresse de stockage (3), le circuit comparateur d'âge (15) émet un signal de validation ;
et **en ce que** une deuxième unité de comparaison (12) est associée à la première unité de comparaison (11) pour recevoir le résultat de la première comparaison, dans lequel la deuxième unité de comparaison (12) est configurée pour être une unité validée soit une unité invalidée selon le signal de validation ou d'invalidation émis par l'unité de comparaison d'âge et sur la base du résultat de la première comparaison, dans lequel, lorsque la deuxième unité de comparaison (12) est validée, la deuxième unité de comparaison (12) est configurée de sorte à comparer un deuxième sous-ensemble de bits de l'adresse de chargement (5) à un deuxième sous-ensemble de bits correspondant de l'adresse de stockage (3) pour produire un résultat de la deuxième comparaison indiquant si le deuxième sous-ensemble de bits de l'adresse de chargement (5) équivaut ou non au deuxième sous-ensemble de bits de l'adresse de stockage (3) ;
dans lequel le résultat de la deuxième comparaison est associé au résultat de la première comparaison pour produire un résultat final, afin de rechercher dans la file d'attente de chargement des instructions de chargement faussement spéculatives.

2. Microprocesseur selon la revendication 1, dans lequel le circuit comparateur (2) est configuré de sorte à rechercher dans la file d'attente de chargement (1) et/ou dans la file d'attente de stockage n'importe quelle adresse équivalant à l'adresse de stockage (3) et/ou à l'adresse de chargement (5).

3. Microprocesseur selon, soit la revendication 1, soit la revendication 2, dans lequel la file d'attente de chargement et/ou la file d'attente de stockage sont au moins une structure de mémoire d'une mémoire centrale du microprocesseur dédiée à stocker l'information associée à des opérations de chargement et/ou à des opérations de stockage qu'exécute le microprocesseur.

4. Microprocesseur selon l'une quelconque des revendications précédentes, dans lequel la file d'attende de chargement stocke une deuxième adresse de chargement, et le circuit comparateur (2) comporte en outre :
une troisième unité de comparaison configurée pour comparer le premier sous-ensemble de bits de l'adresse de stockage (3) à un premier sous-ensemble de bits correspondant de la deuxième adresse de chargement pour produire un résultat de la troisième comparaison indiquant si le premier sous-ensemble de bits de l'adresse de stockage (3) équivaut ou non au premier sous-ensemble de bits de la deuxième adresse de chargement ; et
une quatrième unité de comparaison associée à la troisième unité de comparaison pour recevoir le résultat de la troisième comparaison, dans lequel la quatrième unité de comparaison est configurée pour être validée et invalidée sur la base du résultat de la troisième comparaison, dans lequel, lorsque la quatrième unité de comparaison est validée, la quatrième unité de comparaison est configurée pour comparer le deuxième sous-ensemble de bits de l'adresse de stockage (3) à un deuxième sous-ensemble de bits correspondant de la deuxième adresse de chargement.

5. Microprocesseur selon l'une quelconque des revendications précédentes, dans lequel la deuxième unité de comparaison (12) est configurée pour produire un résultat de la deuxième comparaison, et dans lequel le circuit comparateur (2) comporte en outre :
une fonction ET (13) configurée pour recevoir le résultat de la première comparaison et le résultat de la deuxième comparaison et pour émettre un signal de sortie indiquant si l'adresse de stockage (3) équivaut ou non à l'adresse de chargement (5).

6. Microprocesseur selon l'une quelconque des revendications précédentes, dans lequel le premier sous-ensemble de bits de l'adresse de stockage (3) comprend une pluralité de bits les moins significatifs de l'adresse de stockage (3) et/ou le premier sous-ensemble de bits de l'adresse de chargement (5) comprend une pluralité de bits les moins significatifs de l'adresse de chargement (5).

7. Microprocesseur selon l'une quelconque des revendications précédentes, dans lequel l'adresse de chargement (5) est une adresse de mémoire physique à laquelle accède le microprocesseur, en réponse à une instruction de chargement associée comportant une entrée correspondante dans la file d'attente de chargement de chargement (1) et/ou l'adresse de stockage (3) est une adresse de mémoire physique à laquelle accède le microprocesseur, en réponse à une instruction de stockage associée comportant une entrée correspondante dans la file d'attente de stockage.

8. Microprocesseur selon l'une quelconque des revendications précédentes, dans lequel la première unité de comparaison (11) est un premier comparateur configuré pour effectuer une comparaison au niveau du bit du premier sous-ensemble de bits de l'adresse de stockage (3) et le premier sous-ensemble de l'adresse de chargement (5) ; et
la deuxième unité de comparaison (12) est un deuxième comparateur configuré pour effectuer une comparaison au niveau du bit du deuxième sous-ensemble de bits de l'adresse de stockage (3) et le deuxième sous-ensemble de bits de l'adresse de chargement (5).

9. Microprocesseur selon l'une quelconque des revendications précédentes, dans lequel la file d'attente de chargement (1) et/ou la file d'attente de stockage comprend une pluralité d'entrées comportant une pluralité d'adresses, dans lequel chacune de la pluralité d'adresses est comparée à l'adresse de stockage (3) et/ou à l'adresse de chargement (5).

10. Microprocesseur selon l'une quelconque des revendications précédentes, dans lequel le premier sous-ensemble de bits de l'adresse de stockage (3) ne comprend pas plus du quart d'un nombre total de bits dans l'adresse de stockage (3) et/ou le premier sous-ensemble de bits de l'adresse de chargement (5) ne comprend pas plus du quart d'un nombre total de bits dans l'adresse de chargement (5).

11. Microprocesseur selon l'une quelconque des revendications précédentes, dans lequel le deuxième sous-ensemble de bits de l'adresse de stockage (3) inclut au moins un bit de l'adresse de stockage (3) qui n'est pas inclus dans le premier sous-ensemble de bits de l'adresse de stockage (3) et/ou le deuxième sous-ensemble de bits de l'adresse de chargement (5) inclut au moins un bit de l'adresse de chargement (5) qui n'est pas inclus dans le premier sous-ensemble de bit de l'adresse de chargement (5).

12. Microprocesseur selon la revendication 11, dans lequel
le deuxième sous-ensemble de bits de l'adresse de stockage (3) ne contient aucun bit commun avec le premier sous-ensemble de l'adresse de stockage (3) et/ou le deuxième sous-ensemble de bits de l'adresse de chargement (5) ne contient aucun bit commun avec le premier sous-ensemble de bits de l'adresse de chargement (5).

13. Procédé dans un microprocesseur, dans lequel une file d'attente de chargement (1) comporte des entrées multiples (4) correspondant chacune à une instruction de chargement comprenant des entrées multiples (4), dans lequel chaque entrée (4) inclut une adresse de chargement correspondante (5) et une information sur l'âge (6), et dans lequel une file d'attente de stockage comporte des entrées multiples correspondant chacune à une instruction de stockage, dans lequel chaque entrée inclut une adresse de stockage correspondante (3) et une information sur l'âge (7), le procédé consistant à :
Comparer un premier sous-ensemble de bits d'une adresse de chargement (5) à un premier sous-ensemble de bits d'une adresse de stockage (3) pour produire un résultat de la première comparaison indiquant si le premier sous-ensemble de bits de l'adresse de chargement (5) équivaut ou non au premier sous-ensemble de bits de l'adresse de stockage (3) ; dans lequel le procédé est caractérisé en
comparant l'information sur l'âge (6) correspondant à l'adresse de chargement (5) à l'information sur l'âge (7) correspondant à l'adresse de stockage (3), dans lequel un signal d'invalidation est émis lorsque l'information sur l'âge (6) correspondant à l'adresse de chargement (5) est supérieure à l'information sur l'âge (7) correspondant à l'adresse de stockage (3) et dans lequel un signal de validation a lieu lorsqu'une information sur l'âge (6) correspondant à l'adresse de chargement (5) est inférieure à l'information sur l'âge (7) correspondant à l'adresse de stockage (3), et
lorsque le premier sous-ensemble de bits de l'adresse de chargement (5) équivaut au premier sous-ensemble de bits de l'adresse de stockage (3), et selon le signal de validation ou le signal d'invalidation, en comparant un deuxième sous-ensemble de bits de l'adresse de chargement (5) à un deuxième sous-ensemble de bits correspondant de l'adresse de stockage (3) pour produire un résultat de la deuxième comparaison indiquant si le deuxième sous-ensemble de bits de l'adresse de chargement (5) équivaut ou non au deuxième sous-ensemble de bits de l'adresse de stockage (3) ;
dans lequel le résultat de la deuxième comparaison est associé au résultat de la première comparaison pour produire un résultat final afin de rechercher dans la file d'attente de chargement des instructions de chargement faussement spéculatives.

14. Procédé selon la revendication 13, dans lequel, lorsque le premier sous-ensemble de bits de la file d'attente de stockage (3) n'équivaut pas au premier sous-ensemble de bits de l'adresse de chargement (5), aucun autre bit de l'adresse de stockage (3) et de l'adresse de chargement (5) n'est comparé.

15. Procédé selon, soit la revendication 13, soit la revendication 14, dans lequel la file d'attente de chargement stocke une deuxième adresse de chargement, et le procédé consiste en outre
à comparer le premier sous-ensemble de bits de l'adresse de stockage (3) à un premier sous-ensemble de bits correspondant de la deuxième adresse de chargement ; et
lorsque le premier sous-ensemble de bits de la deuxième adresse de chargement équivaut au premier sous-ensemble de bits de l'adresse de stockage (3), en comparant le deuxième sous-ensemble de bits de l'adresse de stockage (3) à un deuxième sous-ensemble de bits correspondant de la deuxième adresse de chargement.
